# EUROPÄISCHE PATENTANMELDUNG

(11) **EP 1 415 802 A1**
(43) Veröffentlichungstag der Anmeldung: **06.05.2004**
(21) Anmeldenummer: 03025198.7
(22) Anmeldetag: 04.11.2003
(51) Int. Cl.: B32B 27/32, B29C 47/00, F16L 11/04

(54) **Flexibler Schlauch**

(30) Priorität: 04.11.2002 DE 10251511
(71) Anmelder: Höppner, Frank, 40489 Düsseldorf (DE)
(72) Erfinder: Höppner, Frank, 40489 Düsseldorf (DE)
(74) Vertreter: Patentanwälte Wenzel & Kalkoff

(57) **Zusammenfassung**

Die Erfindung geht von einem flexiblen Schlauch für Verbindungsschläuche, zum Transport von heißen und kalten Medien wie Flüssigkeiten, Emulsionen, Suspensionen oder Aerosolen, wobei der Verbindungsschlauch aus mindestens einer Schicht besteht, aus. Um unter Beibehaltung einer ausreichend hohen Temperatur- und Druckbeständigkeit sowie Elastizität und Flexibilität einen Schlauch zu schaffen, der die Anforderungen an den Einsatz für den Transport von Medien in Trinkwasserqualität erfüllt und einer Biofilmbildung vorbeugt, ist vorgesehen, dass die Schicht durch Extrudieren einer oder mehrerer Verbindungen auf Polyethylenbasis mit einer niedrigen Dichte im Bereich von 0,800-0,920 g/cm³ und einem Schmelzindex von 0,3-4 g/10 min gebildet ist.

## Beschreibung

Die Erfindung betrifft einen flexiblen Schlauch für Verbindungsschläuche, zum Transport von heißen und kalten Medien wie Flüssigkeiten, Emulsionen, Suspensionen oder Aerosolen, wobei der Verbindungsschlauch aus mindestens einer Schicht besteht.

Bekannte Schläuche der vorstehenden Art finden Verwendung bei Installationen im Fahrzeugbau (bspw. Wohnwagen bzw. Wohnmobilen), für Versorgungs- und Entsorgungsleitungen in Flugzeugen, Bahnen oder Schiffen, wo sie die Aufgabe haben, Wasser, oftmals in Trinkwasserqualität, zu Verbrauchs- oder Entnahmestellen zu fördern und auch wieder abzuleiten.

Weiterhin werden bekannte Schläuche der vorstehenden Art bei der Hausinstallation verwendet, bspw. als sog. "Panzerschläuche". Dabei handelt es sich um Schlauchleitungen bis zu 1,50 m Länge für den Anschluß von Sanitärarmaturen, die aus einem elastomeren Schlauch mit einer flexiblen Edelstahlummantelung bestehen, wobei diese zur Erhöhung der Druckbeständigkeit dient. In der Vergangenheit hat die Verwendung derartiger Schlauchleitungen in der Trinkwasser-Hausinstallation stark zugenommen. Die Schlauchleitungen werden dabei insbesondere für den Anschluß von Sanitärarmaturen und Apparaten innerhalb der Trinkwasser-Hausinstallation, für unzugängliche Installationen und als Dusch- bzw. Brauseschläuche für Sanitärarmaturen verwendet, wobei bei der Verwendung als Brauseschlauch diese im wesentlichen drucklos sind, so dass der Einsatz einer Metallummantelung unbedingt nicht erforderlich ist.

Die Schlauchleitungen werden ferner für den Anschluß von Haushaltsgeräten wie Waschmaschinen, Geschirrspülmaschinen etc. verwendet. Dort gehören sie zwar nicht zur Trinkwasser-Hauptinstallation, sie transportieren aber Trinkwasser, dessen Qualität nicht beeinträchtigt werden darf.

Bekannte Schläuche der vorstehenden Art werden auch als Gartenschlauch eingesetzt. Hier wird in aller Regel ebenfalls Wasser mit Trinkwasserqualität gefördert. Während zur Bewässerung von Ziergewächsen an die Wasserqualität keine so strengen Anforderungen gestellt werden müssen, ist es bspw. im privaten Bereich von größter Wichtigkeit, die Trinkwasserqualität bei der Förderung, insbesondere jedoch bei im Schlauch für einen längeren Zeitraum stehenden Wasser nicht zu beeinträchtigen, um eine Befüllung bspw. von Kinderplanschbecken oder Duschen oder eine Bewässerung von Lebensmittelgewächsen risikolos durchführen zu können.

Weiterhin werden diese Schlauchleitungen für die Förderung von Heiß- und Kaltwasser für Heizungs- und Kühlanlagen eingesetzt. Hier ist es oftmals zusätzlich erforderlich, den Schlauch mit einer Sperrschicht zur Verhinderung der Diffusion von Sauerstoff in das Schlauchinnere auszustatten, um bspw. Korrosion von entsprechend verbundenen Teilen der Installation aus anderen Materialien im Wasserkreislauf vorzubeugen.

Weiterhin werden diese Schlauchleitungen insbesondere für die Temperierung von Gewächshäusern, Pflanzböden oder den Kulturpflanzen selbst eingesetzt, wobei hier besondere Anforderungen an die Inhaltsstoffe der verwendeten Schlauchmaterialien zu stellen sind.

Weitere Einsatzgebiete derartiger Schlauchleitungen finden sich im Bereich der Lebensmitteltechnik, wo sie insbesondere im Herstellungsprozess der Lebensmittel innerhalb von Förder- und Abfüllanlagen für die unterschiedlichsten Nahrungsmittel wie beispielsweise Getränke, Suppen, Saucen die Aufgabe haben, heiße und kalte Flüssigkeiten, Suspensionen, Emulsionen oder Aerosole zu fördern. Hierbei sind, wie hinlänglich bekannt ist, offensichtlich hinsichtlich Hygiene, chemischer Beständigkeit (insbesondere im Hinblick auf die Verwendung von Reinigungs- und Desinfektionsmitteln etc.) und mechanischen Eigenschaften strenge Anforderungen an das Schlauchmaterial und den Verbindungsschlauch selbst zu stellen. Eine besondere Rolle spielt hierbei die Transparenz des Verbindungsschlauches, um bspw. eine einfache optische Überwachung der im Einsatz befindlichen Förderleitungen hinsichtlich Kontamination o.ä. zu gewährleisten.

Ein weiteres Anwendungsgebiet derartiger Schlauchleitungen findet sich in der kosmetischen Industrie, wo die für die Herstellung verschiedener Produkte die für ihre Produktion nötigen Ausgangsstoffe und die Produkte selbst in hoher und gleichbleibender Qualität gefördert werden müssen.

Ähnliche Anforderungen stellt auch die Halbleitertechnik an derartige Schlauchleitungen, wobei in diesem Anwendungsbereich Aspekte hinsichtlich der Verträglich und Beständigkeit mit den hier verwendeten Fluiden relevant sind. Die Prozesse der Halbleitertechnik stellen noch weit über die Trinkwasserverordnungen hinausgehende Anforderungen an die Verbindungsschläuche und -leitungen, da es in keinem Fall zu Verunreinigungen der geförderten flüssigen Substanzen kommen darf.

Weiterhin werden bekannte Schläuche der vorstehenden Art im Bereich der Medizintechnik zur Zu- und Abfuhr von Flüssigkeiten, Emulsionen, Suspensionen oder Aerosolen sowohl zwischen medizinischen Vorrichtungen, Geräten und Anlagen selbst oder den entsprechenden Vorrichtungen und dem Patienten. Hier ist bspw. an die Ver- und Entsorgung von Wasser oder Behandlungsmedien in Krankenhäusern oder Arztpraxen zu denken, oder die für Infusionen, Blutwäsche o.ä. benötigen Verbindungsschläuche.

Auch für die Infrastruktur innerhalb der unterschiedlichsten Labore der bspw. chemischen oder biologischen Industrie haben Verbindungsschläuche der vorstehenden Art eine Schlüsselrolle für die Förderung unterschiedlichster Medien.

Die bekannten, in den o.g. Bereichen verwendeten Schlauchleitungen weisen jedoch eben den Nachteil auf, dass sie dazu neigen, die mikrobiologische Trinkwasserqualität zu beeinträchtigen. Die Ursache dafür liegt in der Rezeptur der polymeren Schlauchmaterialien, nämlich Weich-PVC (Polyvinylchloride) und EPDM (Ethylen-Propylen-Terpolymer-Kautschuk).

Bei Verwendung von PVC als Schlauchmaterial können die für die unterschiedlichen o.g. beispielhaft genannten Einsatzgebiete gewünschten mechanischen Eigenschaften wie Elastizität, Flexibilität, Temperatur- und Druckbeständigkeit und Reißfestigkeit nur durch Zusatz von Weichmachern erreicht werden. In diesem Zusammenhang ist dabei unter Flexibilität der für den Anteil des linear-elastischen Verhaltens des Schlauchmaterials verantwortliche Elastizitäts- bzw- Biegemodul und unter Elastizität das Maß an Dominanz des linear-elastischen Materialverhaltens im Hinblick auf die gesamte Spannungs-Dehnungscharakteristik des Kunststoffes zu verstehen.

Für Schläuche aus Weich-PVC werden derzeit dem Fachmann bekannte Weichmacher, meist Phthalate eingesetzt, die dazu führen, dass aus derartigen Materialien hergestellte Schläuche nicht den heutigen Ansprüchen, die an die Förderung von Lebensmitteln, Trinkwasser etc. gestellt werden, entsprechen, da Phthalsäureester (z. B. DEHP) als gesundheitsschädlich eingestuft sind. Nach gültiger Vorschriftslage darf der Gehalt an DEHP im Trinkwasser den Wert von 0,15mg/l nicht überschreiten.

Da Weichmacher generell dazu neigen, auf Dauer vom im Schlauch geförderten Medium ausgewaschen zu werden, kann dieser Grenzwert auf Grund der oftmals auftretenden langen Verweilzeiten oder geringen Durchflussraten des Mediums im Schlauch leicht überschritten werden. Diese Problematik führt darüber hinaus dazu, dass aufgrund der hydrolytischen Empfindlichkeit dieser Esterverbindungen ein derart bekannter Schlauch bei längerer Benutzung versprödet, wobei diese Versprödung die mechanischen Eigenschaften beeinträchtigt und schließlich zum Versagen führen kann.

Weiterhin wird durch die dem Fachmann bekannten Weichmacher bei der Herstellung flexibler Schläuche aus PVC das Wachstum von Mikroorganismen gefördert, da die dem Schlauch enthaltenen Stoffe mikrobiell gut abbaubar sind.

Bedingt durch verschiedene physiologische und ökologische Ursachen können potentiell pathogene Mikroorganismen in diesen Biofilmen überleben und sich dort sogar vermehren. Dies betrifft insbesondere Vertreter der Pseudomonaden, Legionellen, Amöben, atypische Mykobakterien und Aeromonaden, die nur durch gezielte Untersuchungen erkannt werden können. Es handelt sich aber vor allem um solche Krankheitserreger, die im Trinkwasser bereits vorkommen, aber nur in sehr geringen, unbedenklichen Konzentrationen zu keinen gesundheitlichen Problemen führen.

Aber auch Krankheitserreger fäkalen Ursprungs können sich in solchen Biofilmen etablieren, wenn sie einmal, bspw. durch Störungen der Aufbereitung oder Chlorung oder Kontamination des Trinkwassers im Verteilungsnetz durch Rohrbrüche etc. in die Leitungen gelangt sind. Aus dem Biofilm können dann Bakterien wieder an das Trinkwasser abgegeben werden, so dass eine Gesundheitsgefährdung nicht auszuschließen ist.

Weiterhin sind aufgrund der hohen Dichte von PVC (spez. Gewicht ca. 1,15 bis 1,25g/cm³) die bekannten Schläuche relativ schwer und damit unhandlich in ihrer Handhabung.

Neben der Verwendung von Weich-PVC als Schlauchmaterial werden flexible Schläuche der vorstehenden Art auch aus EPDM gefertigt, beispielsweise für den Sanitärbereich. Hier muss, wie auch bei Schläuchen aus PVC, dem Grundmaterial Weichmacher zugefügt werden, um die gewünschten mechanischen Eigenschaften zu gewährleisten. Zum Einsatz kommen hierfür naphthenische Weichmacher, Paraffine und mikrokristalline Wachse, die ebenfalls mikrobiell sehr gut abbaubar sind, so dass häufig übermäßig aufgewachsene Biofilme feststellbar sind. Darüber hinaus kann mit den gegenwärtigen Schläuchen aus EPDM die Trinkwasserverordnung nicht erfüllt werden (DVGW Bl. W270, sowie KTW Empfehlung). Insbesondere für Installationen im Heizungsbereich werden die bekannten EPDM-Schläuche mit einer Sauerstoffsperrschicht versehen. In Verbindung mit EPDM erfüllt diese Barriere nicht die zwingenden Anforderungen nach DIN 4726, da sie sich im Lauf der Zeit abbaut.

Der Erfindung liegt daher die Aufgabe zugrunde, unter Beibehaltung einer ausreichend hohen Temperatur- und Druckbeständigkeit sowie mechanischen Eigenschaften wie Elastizität, Flexibilität und Reißfestigkeit einen leicht handzuhabenden Schlauch zu schaffen, der keine Weichmacher enthält und damit einer Kontamination, Biofilmbildung oder Versprödung vorbeugt.

Die Erfindung löst die Aufgabe durch einen flexiblen Schlauch gemäß Anspruch 1. Vorteilhafte Weiterbildungen der Erfindung sind in den Unteransprüchen angegeben.

Wesentlich für die Erfindung ist, dass eine oder mehrere den Verbindungsschlauch bildenden Schichten durch ein entsprechend formgebendes Fertigungsverfahren, bspw. durch Extrudieren einer einzigen oder einer Mischung unterschiedlicher Verbindungen auf Polyethylenbasis mit einer das als Reingranulat oder Grariulatmischung vorliegende Schlauchrohmaterial charakterisierenden mittleren niedrigen Dichte im Bereich von 0,800-0,920 g/cm³ und einem Schmelzindex von 0,3-4 g/10 min. gebildet ist. Diese und im folgenden aufgeführte Dichteangaben beziehen sich auf Messungen nach ISO1183 und Angaben zum Schmelzindex auf Messungen nach ISO113, 190°C/2,16 kg.

Hierbei kann es sich insbesondere jeweils um eine einzige oder eine Mischung aus unterschiedlichen katalytischen Darstellungen, unter Verwendung dem Fachmann bekannter Verfahren, wie bspw. unter Verwendung von Ziegler-Natta-, Metallocen- oder CGC (constrained geometric catalyst) single-side Katalysatoren, stammende Verbindung auf Polyethylenbasis handeln, wobei gegen die Lehre aus DE10116427 die Hinzunahme einer bestimmten Menge an Ziegler-Natta katalysierten Polyethylenverbindungen zu aus anderen Katalyseverfahren gewonnenen Polyethylenverbindungen ausgesprochen positive Eigenschaften des erfindungsgemäßen Schlauches bewirkt. Die hier verwendeten Polyolefinplastomere (POP) mit Ziegler-Nattta-katalysierten Verbindungen weisen eine hohe Temperaturbeständigkeit und Festigkeit auf. Bei einer ggf. anschließend durchgeführten Covernetzung bleibt die lamellare festigkeitsteigernde Kristallitstruktur der Ziegler-Nattakatalysierten Verbindung erhalten.

Grundsätzlich ist neben den Reinstoffen oder Mischungen aus bzw. mit o. g. POP (insbesondere den hier relevanten Ethylen-alpha-Olefin-Copolymeren) auch eine entsprechende Verwendung von Propylen-alpha-Olefin-Copolymeren oder Ethylen-Propylen-alpha-Olefin-Terpolymeren aus unterschiedlicher Katalyse (bspw. single-side Katalysatoren) möglich.

Der erfindungsgemäße Schlauch kann sowohl aus einer einzigen als auch aus mehreren Schichten bestehen. Er zeichnet sich insbesondere dadurch aus, dass er inhärent flexibel ist. Dabei liefert der erfindungsgemäß gewählte Bereich der Dichte eine optimale Abstimmung zwischen den mechanischen Eigenschaften wie Flexibilität, Elastizität oder Reißfestigkeit. Auf Additive wie Weichmacher, die üblicherweise zur Erreichung der gewünschten Flexibilität erforderlich sind, aber aufgrund ihrer Wasserlöslichkeit Gesundheitsschäden hervorrufen können, kann folglich verzichtet werden. Da ferner die erfindungsgemäßen Verbindungen keinen Nährboden für die Bildung eines Biofilms liefern, kann deren Entstehung in den erfindungsgemäßen Schläuchen zuverlässig ausgeschlossen werden.

Der erfindungsgemäß gewählte Bereich des Schmelzindexes gewährleistet eine ausreichende Fließfähigkeit der gewählten Verbindung bei der Herstellung. Gleichzeitig weist der erfindungsgemäße Schlauch eine ausreichende Temperaturbeständigkeit auf, so dass auch eine Weiterverarbeitung, wie bspw. das Aufwickeln der Schläuche auf Transportrollen im Anschluß an den Fertigungs-, bspw. Extrusionsvorgang, ohne zusätzliche Maßnahmen gegen ein Aneinanderhaften durchgeführt werden kann.

Die Verwendung der oben charakterisierten Materialien auf Polyethylenbasis zur Herstellung der erfindungsgemäßen Schläuche ermöglicht es ferner, diese mit konventionellen Verfahren, wie beispielsweise der Extrusion, kostengünstig herzustellen.

Nach einer weiteren Ausgestaltung der Erfindung weist das Material auf Polyethylenbasis eine Dichte von 0,850-0,910 g/cm³, vorzugsweise 0,860-0,905 g/ cm³ auf. Diese Ausgestaltung der Erfindung stellt einen Bereich dar, in dem die Abstimmung zwischen Elastizität und Flexibilität einerseits, sowie Festigkeit anderseits besonders vorteilhaft ist.

Die oben charakterisierten Materialien auf Polyethylenbasis zur Herstellung eines flexiblen Schlauchs können grundsätzlich innerhalb der erfindungsgemäßen Parameter so gewählt werden, dass eine ausreichende Temperatur- und Druckbeständigkeit des erfindungsgemäßen Schlauchs vorliegt. Insbesondere im Falle des drucklosen Einsatzes des erfindungsgemäßen Schlauchs als Brauseschlauch für Sanitärarmaturen, bspw. als Schlupfbrause an Spültischarmaturen, als Brauseschlauch in Bädern oder als Förderschlauch für Lebensmittel, kann auf Mittel zur Steigerung der Temperatur und Druckbeständigkeit des erfindungsgemäßen Schlauchs verzichtet werden.

Falls jedoch eine Steigerung der Temperatur- und Druckbeständigkeit des erfindungsgemäßen Schlauchs für den Einsatz unter erhöhten Temperatur- und Druckeinflüssen erforderlich ist, können hierfür geeignete Maßnahmen getroffen werden. So kann der Schlauch nach einer Weiterbildung der Erfindung beispielsweise durch dem Fachmann geläufige Verfahren wie bspw. das Armieren mit natürlichen, synthetischen und/oder metallischen Fasern und/oder Fasergeflechten ausgestattet werden. Hierbei kann die Armierung innerhalb der den Schlauch bildenden einzigen oder bei mehrschichtigem Aufbau des Schlauches einer der Schichten selbst liegen. Weiterhin kann diese Armierung jeweils zwischen zwei Schichten bspw. in Form einer Umflechtung und nachträglicher Ummantelung dieser Umflechtung mit einer weiteren erfindungsgemäßen Schicht erfolgen. Auf die anschließende Ummantelung der Armierung kann auch verzichtet werden, so dass bspw. zur Herstellung eines Panzerschlauchs, der eine gesteigerte Druckbeständigkeit aufweist und gegen äußere mechanische Einfüße geschützt ist, der erfindungsgemäße Schlauch mit einer außenliegenden Armierung, im Fall eines Panzerschlauches aus metallischem Werkstoff, versehen wird.

Nach einer vorteilhaften Weiterbildung der Erfindung ist die Schicht jedoch mit einem Vernetzungsgrad von 45-75% an jeder Stelle der Schicht vernetzt. Durch diese Vernetzung wird die Temperatur- und Druckbeständigkeit verbessert, wobei gleichzeitig die notwendige Flexibilität erhalten bleibt. Damit wird das Einsatzspektrum des erfindungsgemäßen Schlauchs weiter erhöht.

Die Vernetzung kann grundsätzlich mit verschiedenen, dem Fachmann geläufigen Verfahren, wie bspw. das Vernetzen mit Silanen oder das peroxidische Vernetzen durchgeführt werden. Nach einer weiteren Ausgestaltung der Erfindung ist die Vernetzung der Schicht durch Bestrahlung mit Elektronen hergestellt. Die Vernetzung mittels Elektronenstrahlung stellt ein kostengünstiges und schnelles Vernetzungsverfahren dar. Ferner weist es den Vorteil auf, dass im Gegensatz zum chemischen Vernetzen auf potentiell gesundheitsschädliche Additive verzichtet werden kann, die sich beim Vernetzen in der Schicht des Schlauchs einlagern und im Gebrauch mit dem Trinkwasser herausgespült und beim Verzehr durch den menschlichen Körper aufgenommen werden können.

Nach einer besonders vorteilhaften Ausgestaltung der Erfindung ist die Vernetzung der Schicht von 60-75% bei einer Bestrahlung von 75-125 KGy (Kilo Grey) hergestellt. Diese Bestrahlungsrate wird mit einem nur sehr geringen Energiebedarf erzielt, was geringe Energiekosten zur Folge hat. Ferner gewährleistet diese Bestrahlungsrate gleichzeitig einen Vernetzungsgrad, der zu einem Schlauch führt, dessen Flexibilität und Druck- und Temperaturbeständigkeit in besonders vorteilhafter Weise aufeinander abgestimmt sind.

Grundsätzlich kann der erfindungsgemäße Schlauch aus einer einzigen, kostengünstig extrudierbaren Schicht gebildet werden. Nach einer Weiterbildung der Erfindung weist der Schlauch jedoch einen durch Coextrusion und/oder Mehrfachextrusion hergestellten mehrschichtigen Aufbau auf, wobei es sich bei einer oder mehreren der Schichten um, bspw. wie schon oben erwähnt, Armierungen oder, wie weiter unten näher ausgeführt wird, um Sperrschichten zur Verhinderung der Eindiffusion von unterschiedlichen Stoffen, insbesondere Gasen (beispielsweise Sauerstoff), oder Haftvermittlungsschichten zur Sicherstellung einer innigen Verbindung zweier der Schichten des mehrschichtig aufgebauten Schlauches handeln kann.

Bei der Coextrusion werden Materialien mit unterschiedlichen Eigenschaften während des Extrusionsprozesses zusammengeführt. Bei der Mehrfachextrusion werden mehrere Schichten nacheinander aufgetragen. Beide Verfahren ermöglichen eine kostengünstige und einfache Herstellung mehrschichtiger Schläuche.

Der mehrschichtige Aufbau ermöglicht dabei die Anpassung der Schläuche an verschiedene Einsatzbereiche, bei denen eine oder mehrere zusätzliche Schichten besondere Eigenschaften aufweisen können, die den Einsatz des erfindungsgemäßen Schlauchs unter den jeweiligen Anforderungen ermöglichen. Eine weitere Schicht kann ferner auch als Dekorschicht ausgeführt werden, die dem erfindungsgemäßen Schlauch bspw. ein besonderes Aussehen und/oder eine besondere Oberflächenstruktur verleiht.

Nach einer besonderen Ausgestaltung der Erfindung ist die Schicht farbig ausgestaltet. Eine farbige Ausgestaltung kann dabei einerseits zur Verbesserung des äußeren Erscheinungsbildes beitragen und andererseits als Abschirmung vor schädlichem UV-Licht dienen. Die farbliche Gestaltung kann dabei durch Beimischung von farbgebenden und/oder UV-Lichtreflektierenden oder -absorbierenden Zusätzen in die Verbindung zur Herstellung eines Schlauchs mit einer einzigen Schicht erfolgen. Die farbige Ausgestaltung kann jedoch auch durch entsprechende Gestaltung einer weiteren Schicht erfolgen.

Neben der farbigen Ausgestaltung einer oder mehrerer des ein- oder mehrschichtig aufgebauten erfindungsgemäßen Schlauchs ist nach einer besonderen Ausgestaltung der Erfindung die Schicht transparent ausgestaltet. Hierbei weisen die Kristallite des für diese Schicht eingesetzten Werkstoffs auf Polyethylenbasis eine Größe auf, welche kleiner als die halbe Wellenlänge des sichtbaren Lichtspektrums ist.

Nach Weiterbildung der Erfindung kann es sich bei einer oder mehrerer der Schichten um Sperrschichten handeln, welche den Austausch von Stoffen zwischen dem im Schlauch geförderten Stoffen und der Umgebung bzw. umgekehrt verhindern. Nach einer besonderen Ausgestaltung der Erfindung handelt es sich bei dieser Schicht um eine Sauerstoff-Sperrschicht, welche auf einer dem Fachmann geläufigen Verbindung, beispielsweise einer Ethylenvinylalkohol-Copolymer-Verbindung, hier insbesondere eine Verbindung auf Ethylenvinylalkohol-Copolymer-Basis mit einem Ethylenanteil von 35-45 Mol%, basiert. Nach einer besonders vorteilhaften Ausgestaltung der Erfindung weist diese Sperrschicht einen Ethylenanteil von 41 Mol% auf.

Nach einer besonders vorteilhaften Ausgestaltung der Erfindung handelt es sich bei mehrschichtigem Aufbau des Schlauches bei einer oder mehrerer der Schichten um einen Haftvermittler. Für den Haftvermittler können dem Fachmann geläufige Verbindungen, besonders vorteilhaft jedoch Verbindungen auf Basis funktionalisierter Polyethylene, die vorzugsweise Maleinsäureanhydrid gepfropft sind, eingesetzt werden.

Bei der Verwendung mehrerer Verbindungen auf Polyethylenbasis zur Herstellung eines erfindungsgemäßen Schlauchs sind diese nach einer vorteilhaften Weiterbildung der Erfindung untereinander mischbar, so dass diese zu einem Schlauch mit einer einzigen oder mehreren Schichten in einfacher und kostengünstiger Weise extrudiert werden können. Die Ausführung derartiger Schläuche kann sowohl in glatter als auch in profilierter Form erfolgen.

Nach einer besonders vorteilhaften Ausgestaltung der Erfindung ist eine der Schichten aus einem oder mehreren Ethylen-Copolymeren gebildet. Dieses Material erfüllt in besonderer Weise die Anforderungen zum Einsatz in Trinkwasser-Hausinstallationen. Es weist keinerlei Inhaltsstoffe auf, die wasserlöslich sind und Gesundheitsschäden hervorrufen oder zur Bildung eines Biofilms oder Ablagerungen im Schlauchinneren beitragen. Aus Ethylen-Copolymeren hergestellte Schläuche weisen in besonders vorteilhafter Weise eine ausreichende Temperatur- und Druckbeständigkeit bei gleichzeitiger Flexibilität auf.

In einer weiteren Ausgestaltung der Erfindung werden der Verbindung auf Ethylen-Copolymer-Basis Hilfsstoffe hinzugefügt, welche dem erfindungsgemäßen Schlauch bzw. einer der Schichten des Schlauches besonders vorteilhafte Eigenschaften verleihen. So kann eine Langzeitstabilisierung der erfindungsgemäßen flexiblen Schläuche durch Beimengung von dem Fachmann hierfür geläufigen Verbindungen, hier den besonders vorteilhaften nicht-hydrolysierbaren phenolischen Antioxidantien, durchgeführt werden.

Eine besonders vorteilhafte Ausgestaltung der Erfindung ergibt sich, wenn der Verbindung auf Ethylen-Copolymer-Basis Metalldesaktivatoren beigemengt werden, da sich dies äußerst positiv auf die Beständigkeit des Schlauches auswirkt, wenn sich dieser oder das durch diesen geförderte Medium in Kontakt mit bspw. Kupfer oder kupferhaltigen Legierungen befindet.

In einer weiteren Ausgestaltung weisen die hergestellten Schläuche besondere tribologische Eigenschaften auf, die dadurch erzielt werden, dass den zur Herstellung der Schicht bei einschichtigem Aufbau bzw. der äußersten Schicht bei mehrschichtigem Aufbau eingesetzten Verbindungen dem Fachmann geläufige Additive zur Einstellung des Reibungskoeffizienten/Antiblock beigement werden.

Ausführungsbeispiele der Erfindung werden im folgenden erläutert.

Ein flexibler Schlauch wird im Extrusionsverfahren unter Zuhilfenahme eines Extruders hergestellt. Dabei wird dem Extruder die für den flexiblen Schlauch gewählte Verbindung
- meist in Form eines Granulats, bei welchem es sich um ein homogenes Granulat oder eine Mischung unterschiedlicher Granulate handeln kann - zugeführt. Die gewählte Verbindung auf Polyethylenbasis wird in eine homogene Schmelze umgewandelt. Im Extruder wird die aufgeschmolzene Verbindung einem angeflanschten Werkzeug in Form des zu extrudierenden Halbzeugs zugeführt. Das Werkzeug enthält einen Fließkanal, der vom Schmelzestrom durchflossen wird und die Schmelze in die gewünschte Schlauchform bringt.

Eine erste Verbindung auf Polyethylenbasis für einen flexiblen Schlauch weist einen Schmelzindex von 1 und eine Dichte von 0,905 g/cm³ auf. Der hergestellte Schlauch weist bei noch ausreichender Flexibilität und Elastizität bereits eine hohe Temperatur- und Druckbeständigkeit auf. Für eine Erhöhung der Druckbeständigkeit des Schlauches kann dieser auch vernetzt oder armiert werden.

Eine zweite Verbindung auf Polyethylenbasis zur Herstellung eines flexiblen Schlauchs weist eine Dichte von 0,885 g/cm³ und einen Schmelzindex von 1 auf. Aufgrund der gegenüber der ersten Verbindung geringeren Dichte weist der unter Verwendung dieser Verbindung hergestellte Schlauch eine höhere Flexibilität und Elastizität auf, wobei gleichzeitig die Temperatur- und Druckbeständigkeit etwas geringer ist als bei der ersten Verbindung. Für eine Erhöhung der Druckbeständigkeit des Schlauches kann dieser auch vernetzt oder armiert werden.

Eine dritte Verbindung auf Polyethylenbasis zur Herstellung eines flexiblen Schlauchs weist eine Dichte von o,868 g/cm3 und einen Schmelzindex von 0,5 auf. Gegenüber der ersten und zweiten Verbindung weist diese Verbindung die geringste Dichte und den geringsten Schmelzindex auf. Aus dieser Verbindung hergestellte Schläuche weisen eine außerordentlich hohe Flexibilität und Elastizität auf. Die gegebene Temperatur- und Druckbeständigkeit macht es jedoch oftmals erforderlich, eine Vernetzung der Schläuche durchzuführen. Ein Vernetzungsgrad von 65% wird dabei durch eine Bestrahlung mit 100 KGy erreicht. Dieser Vernetzungsgrad erzeugt eine ausreichend hohe Temperatur- und Druckbeständigkeit bei im wesentlichen gleichbleibender Flexibilität.

## Patentansprüche

1. Flexibler Schlauch für Verbindungsschläuche zum Transport von heißen und kalten Medien wie Flüssigkeiten, Emulsionen, Suspensionen oder Aerosolen bestehend aus mindestens einer Schicht,
**dadurch gekennzeichnet, dass**
die Schicht durch Extrudieren einer oder mehrerer Verbindungen auf Polyethylenbasis mit einer das als Reinstoff oder Stoffmischung vorliegende Material charakterisierenden mittleren niedrigen Dichte im Bereich von 0,800-0,920 g/cm³ und einem Schmelzindex von 0,3-4 g/10 min. gebildet ist.

2. Flexibler Schlauch nach Anspruch 1, **dadurch gekennzeichnet, dass** die Verbindungen eine Dichte von 0,850-0,910 g/cm³, vorzugsweise 0,860-0,905 g/cm³ aufweisen.

3. Flexibler Schlauch nach einem oder mehreren der vorhergehenden Ansprüche, **dadurch gekennzeichnet, dass** bei der Verwendung mehrerer Verbindungen auf Polyethylenbasis diese untereinander homogen mischbar sind.

4. Flexibler Schlauch nach einem oder mehreren der vorhergehenden Ansprüche, **dadurch gekennzeichnet, dass** die Schicht aus Ethylen-Copolymer(en) gebildet ist.

5. Flexibler Schlauch nach einem oder mehreren der vorhergehenden Ansprüche, **dadurch gekennzeichnet, dass** es sich bei den Verbindungen um eine einzige oder eine Mischung aus Verbindungen auf Polyethylenbasis handelt, welche jeweils unter Verwendung von Ziegler-Natta-, Metallocen- oder CGC (constrained geometric catalyst) single-side Katalysatoren hergestellt sind.

6. Flexibler Schlauch nach einem oder mehreren der vorhergehenden Ansprüche, **dadurch gekennzeichnet, dass** dieser einen durch Coextrusion und/oder Mehrfachextrusion hergestellten mehrschichtigen Aufbau aufweist.

7. Flexibler Schlauch nach einem oder mehreren der vorhergehenden Ansprüche, **dadurch gekennzeichnet, dass** eine oder mehrere der Schichten mit einem Vernetzungsgrad von 45-75% an jeder Stelle der Schicht vernetzt ist.

8. Flexibler Schlauch nach einem oder mehreren der vorhergehenden Ansprüche, **dadurch gekennzeichnet, dass** die Vernetzung einer oder mehrerer der Schichten durch Bestrahlung mit Elektronen hergestellt ist.

9. Flexibler Schlauch nach einem oder mehreren der vorhergehenden Ansprüche, **dadurch gekennzeichnet, dass** die Vernetzung einer oder mehrerer der Schichten von 60-75% bei einer Bestrahlung von 75-125 KGy hergestellt ist.

10. Flexibler Schlauch nach einem oder mehreren der vorliegenden Ansprüche, **dadurch gekennzeichnet, dass** eine oder mehrere dieser Schichten in glatter oder in profilierter Form ausgebildet sind.

11. Flexibler Schlauch nach einem oder mehreren der vorhergehenden Ansprüche, **dadurch gekennzeichnet, dass** eine oder mehrere der Schichten farbig und/oder transparent ausgestaltet sind.

12. Flexibler Schlauch nach einem oder mehreren der vorhergehenden Ansprüche, **dadurch gekennzeichnet, dass** Kristallite einer oder mehrerer der Schichten eine Größe aufweisen, die kleiner als die halbe Wellenlänge des sichtbaren Lichtspektrums ist.

13. Flexibler Schlauch nach einem oder mehreren der vorhergehenden Ansprüche, **dadurch gekennzeichnet, dass** eine oder mehrere der Schichten eine Diffusions-Sperrschicht, insbesondere eine Sauerstoff-Diffusions-Sperrschicht ist, die vorzugsweise aus einer Ethylenvinylalkohol-Copolymer-Verbindung gebildet ist.

14. Flexibler Schlauch nach einem oder mehreren der vorhergehenden Ansprüche, **dadurch gekennzeichnet, dass** die Ethylenvinylalkohol-Copolymer-Verbindung, einen Ethylenanteil von 35-45Mol%, vorzugsweise 41 Mol% aufweist.

15. Flexibler Schlauch nach einem oder mehreren der vorhergehenden Ansprüche, **dadurch gekennzeichnet, dass** eine oder mehrere der Schichten eine Haftvermittler-Schicht ist, die vorzugsweise aus einer funktionalisierten Polyethylenverbindung, insbesondere aus einer mit Maleinsäureanhydrid gepfropften funktionalisierten Polyethylenverbindung gebildet ist.

16. Flexibler Schlauch nach einem oder mehreren der vorhergehenden Ansprüche, **dadurch gekennzeichnet, dass** eine oder mehrere der Schichten eine Armierung ist.

17. Flexibler Schlauch nach einem oder mehreren der vorhergehenden Ansprüche, **dadurch gekennzeichnet, dass** die Armierung Fasern und/oder Fasergewebe aufweist, die vorzugsweise aus natürlichem, synthetischen und/oder metallischem Material gebildet sind.

18. Flexibler Schlauch nach einem oder mehreren der vorhergehenden Ansprüche, **dadurch gekennzeichnet, dass** diese Armierung farbig und/oder transparent ausgestaltet ist.

19. Flexibler Schlauch nach einem oder mehreren der vorhergehenden Ansprüche, **dadurch gekennzeichnet, dass** die Armierung formschlüssig und/oder stoffschlüssig mit der darunterliegenden und/oder darüberliegenden Schicht verbunden ist.

20. Flexibler Schlauch nach einem oder mehreren der vorhergehenden Ansprüche, **dadurch gekennzeichnet, dass** die Armierung weder form-, noch stoffschlüssig mit der darunterliegenden und/oder darüberliegenden Schicht verbunden ist.
